# EUROPEAN PATENT SPECIFICATION

(11) **EP 3 301 574 B1**
(45) Date of publication and mention of the grant of the patent: **10.11.2021**
(21) Application number: 17193673.5
(22) Date of filing: 28.09.2017
(51) Int. Cl.: G06F 9/50

(54) **METHOD FOR MANAGING GRAPHIC CARDS IN A COMPUTING SYSTEM**
VERFAHREN ZUR VERWALTUNG VON GRAFIKKARTEN IN EINEM RECHNERSYSTEM
PROCÉDÉ PERMETTANT DE GÉRER DES CARTES GRAPHIQUES DANS UN SYSTÈME INFORMATIQUE

(30) Priority: 30.09.2016 FR 1659446
(43) Date of publication of application: 04.04.2018
(73) Proprietor: Blade, 75002 Paris (FR)
(72) Inventor: CRIOU, Acher, 92200 Neuilly-sur-Seine (FR)
(74) Representative: IP Trust

(56) References cited:
- US-A1- 2011 083 131
- US-A1- 2014 181 806
- US-A1- 2014 244 992

## Description

### FIELD OF THE INVENTION

The present invention generally relates to a method for managing graphics cards and/or graphic processing units in a computer system.

### BACKGROUND OF THE INVENTION

Advances in computer technology have made it economical for individual users to have their own computing system, which caused the proliferation of the Personal Computer (PC). Individual PC usage is very diversified, going from standard office operations or Internet surfing to high-quality video watching or gaming.

Continued advances of this computer technology make these personal computers more and more powerful but also complex and difficult to manage. For this and other reasons especially related to resources sharing enabling lower power consumption for individual user, there is a growing interest to separate the user interface devices, including the display and keyboard, from the application processing parts of the computing system. In this case, the user interface devices are physically located at the desktop of the user, while the processing and storage components of the computer are placed in a remote hosting location. The user interface devices have then access, at the host computer, to a dedicated virtual machine through a network (most usually Internet), the virtual machine emulating the required processing, storage, and other computing resources.

The user interface devices, also called "Zero" or "thin" clients, are therefore heavily dependent on the host computer that fulfills the computational roles for the clients. In such configurations, host computer hosts the operating system and software applications utilized by the "thin" or "zero" clients, thus limiting processing resources on the clients' side.

It is usual that host computer to be constituted of a plurality of physical computing systems (servers) each hosting a plurality of virtual machines. Each virtual machine is connected to a client, and provides a dedicated virtual environment to emulate the functions of a physical personal computer, including graphic data processing to display information on the client screen. The data to be displayed are transferred through the network to the client. The client possesses sufficient computing resources to receive the data flow and display them. The client is also provided with input/output devices (keyboard, mouse...) to exchange information or instruction to the virtual machine, via the network. Virtualization enables the creation of as much virtual machines as necessary to match the number of clients, and the sharing of the physical computing resources on the server side.

In this context, there are different technologies employed to virtualize the graphic card(s) and/or Graphics Processing Unit(s) (GPU) of a physical computing system to remotely render and deliver high performance graphics desktops to clients.

According to a first approach, called "direct graphics adaptor" or "GPU pass-through", a physical GPU is entirely assigned to a virtual machine. Although this approach may be seen satisfactory from a user perspective (since each client benefits from a full and permanent access to a dedicated physical GPU), this require to provide as many GPUs in the computing system as clients, which is not favourable from an economical standpoint.

In an alternative approach, called "software GPU sharing", a GPU hardware is shared among many concurrent virtual machines. Software running on the physical computing system intercept the application program interface calls of processes running in the virtual machines, translate them and/or passes them to the GPU driver. The sharing algorithm can be pre-established, for instance the GPU can be assigned to a virtual machine on a time slice basis. However, sharing a GPU via software API intercept is detrimental to the overall performance and may not be compatible with all applications running on a virtual machine. Also, pre-established time slice sharing algorithm does not necessarily match the actual resources needed by each virtual machine.

In a further approach, the graphic card hardware comprises virtualisation circuits to creates virtual GPUs, allowing concurrent virtual machines to share the GPU hardware without software intercept of API interface calls. However, in this configuration also, a single GPU hardware is shared among concurrent virtual machines without concern of their actual needs, and performance of the overall system is not optimised.

The document US2014181806 discloses a method which allows concurrent virtual machines to share GPU hardware and to dynymically reallocate said GPU hardware according to changing needs of said virtual machines.

### OBJECT OF THE INVENTION

The present invention aims at overcoming all or parts of the aforementioned drawbacks.

### SUMMARY OF THE INVENTION

To this effect, the invention relates to a method for managing graphic cards in a computing system comprising:
- upon initiation of a virtual machine in the computing system, assigning at least a virtual graphic card and a physical graphic card to the virtual machine for processing graphical instructions;
- disconnecting the physical graphic card from the virtual machine to release it to a pool of available graphic cards;
- detecting the need of the virtual machine to process advanced graphical instructions and upon detection, selecting an available graphic card in the pool of available graphics processing cards;
- connecting the available graphic card to the virtual machine for processing the advanced graphical instructions.

Physical graphical cards are dynamically assigned from a pool of available graphic cards to a virtual machine according to its needs in processing advanced graphical instructions. The connected physical graphic card is then fully available to the virtual machine, to provide enhanced performance. Other graphical instructions or requests of the virtual machine can be treated by a virtual graphic card, releasing the physical graphic cards to the pool and to render them available to other virtual machines.

According to further non limitative features of the invention, either taken alone or in all technically feasible combinations:
- the basic graphical instructions originating from the virtual machine are processed by the virtual graphic card;
- the method further comprises disconnecting the physical graphic card from the virtual machine to release it to the pool once the advanced graphical instructions have been processed.
- the disconnecting step comprises:
   o directing the virtual machine (3) to use the virtual graphic card (VGC);
   o shutting down, in the virtual machine (3), the driver of the physical graphic card (GC);
   ∘ de-assigning the physical graphic card (GC) from the virtual machine to release it to the pool of available graphic cards (51)
- the disconnecting step comprises:
   ∘ identifying a communication pattern exchanged between the virtual machine and the physical graphic card, the communication pattern comprising a repeated request to the physical graphic card and a repeated reply from the physical graphic card;
   ∘ emulating the presence of the physical graphic card by sending the repeated reply to the virtual machine upon reception of the repeated request.
- the advanced graphical instruction comprises a DirectX command, an OpenGL command, a hardware acceleration request, or a full screen mode.
- the need of the virtual machine to process advanced graphical instructions is detected by receiving an advanced graphical instruction at the virtual graphic card.
- the need of the virtual machine to process advanced graphical instructions is detected by identifying an advanced graphical instruction in a process executing in the virtual machine.
- the need of the virtual machine to process advanced graphical instructions is detected by receiving, at the emulated physical graphic card, a request differing from the repeated request.

### FIGURES

Many other features and advantages of the present invention will become apparent from reading the following detailed description, when considered in conjunction with the accompanying drawings, in which:
- Figure 1 represents a computing architecture for implementing the present invention;
- Figure 2 represents an exemplary motherboard architecture of a physical computing system of a host computer;
- Figure 3 represents the elements of a video adapter;
- Figure 4 represents the elements of a graphic card;
- Figure 5 is a conceptual view of processes running on a physical computing system.

### DETAILED DESCRIPTION OF SPECIFIC EMBODIMENTS OF THE INVENTION

In the following description, detailed descriptions of known functions and elements that may unnecessarily make the gist of the present invention obscure will be omitted.

Also, a "virtual" element should be understood as a software emulating this element; the software being executing on a physical processing device, such as a CPU or a GPU. For instance, a "virtual GPU" is a software emulating the functions of a GPU, the software being executed on a physical CPU or GPU, or an other physical processing device. A physical processing device may execute a plurality of such virtual elements and/or be used for other processing purposes.

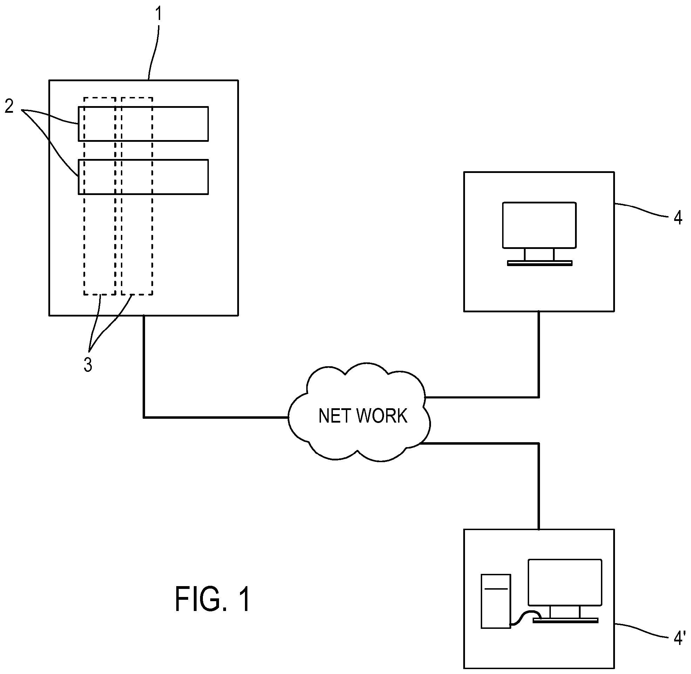

In figure 1, a computing architecture comprises a host computer 1 presenting a plurality of physical computing systems 2. As it is well known, the physical computing systems 2 may be configured to host one or a plurality of virtual machine 3, along with its operating system and applications or processes. Virtualization allows a plurality of virtual machines 3 to be hosted into each physical computing system 2 while providing a plurality of completely isolated virtual environments within a single physical computing system 2. Well known virtualization technologies include Citrix XenServer, Microsoft Hyper-V, VMware ESXi, Oracle Virtual box, GNU Open license based Quick Emulator (QEMU), etc.

Host computer 1 usually comprises a so called "master server" that is executing on a dedicated physical computing system 2 or in a privileged virtual machine hosted in a physical computing system 2 to supervise the operation of host computer 1. For instance, the master server selects, according to available resources, on which physical computing system 2 a new virtual machine 3 should be initiated. The master server may also decide to move a hosted virtual machine from on physical computing device 2 to another, to better balance resources utilization of host computer 1.

Each of the virtual machine 3 in host computer 1 may be dedicated to one particular user. The users interact with their dedicated virtual machine 3 from remote clients 4, 4' each connected to the host computer 1 through a network such as the Internet. Since most, if not all, of the processing is performed at host computer 1, the remote clients 4, 4' may be kept very simple and may comprise, for instance, a simple terminal, network connector and basic input/output devices (keyboard, mouse, ...) such as represented by remote client 4 on figure 1. Alternatively, it could be a standard personal computer, with its own CPU, graphic card, peripherals, ... such as represented by remote client 4'.

To display images on the client terminal, the host computer 1 renders and provides over the network the remote system 4, 4' with display data (and possibly with additional sound or control data for input/output devices located at the remote site 21).

Conversely, the remote clients 4,4' are providing to the host computer 1 control data from input/output devices located at the remote site (keyboard, mouse), and possibly other form of data such as display and sound data provided by a USB or built in camera and microphone of the remote client 4, 4', or network devices at the remote client locations, such as printers....

Data exchanged between the host computer 1 and the remote clients 4, 4' may be compressed in order to limit bandwidth usage of the network.

In a preferred embodiment, each physical computing system 2 is hosting at most fifty virtual machines 3, and preferably, less than ten virtual machines 3. This limitation allows to provide sufficient computing resources to each virtual machine for executing high-end applications with a sufficient level of service. As this will be explained in greater details later in this description, each virtual machine 3 is initiated upon client 4, 4' connection and includes a virtual CPU, a virtual main memory, a virtual graphic card and other physical or virtual resources. Each virtual machine provides a virtual high-end personal computer that is under control of a remote client 4, 4'.

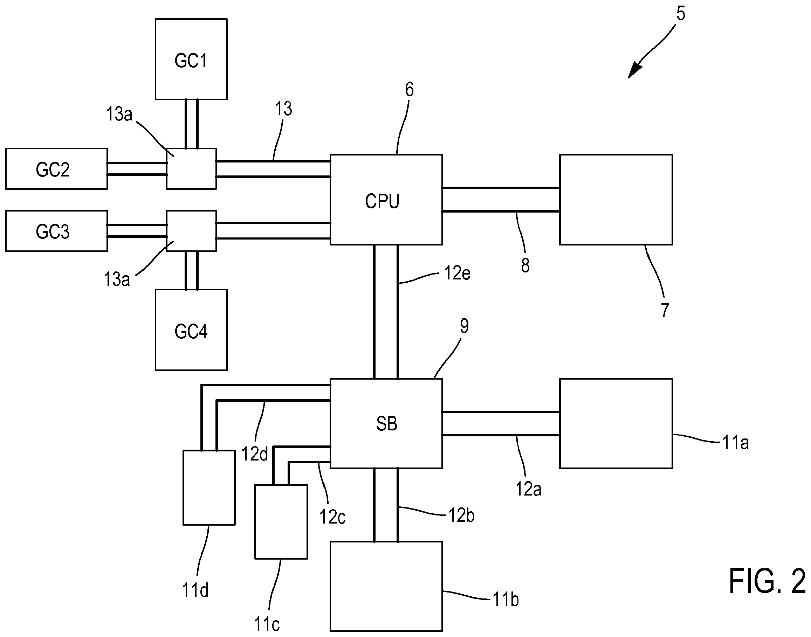

Figure 2 represents an exemplary motherboard 5 architecture of a physical computing system 2 compatible with the invention. The motherboard 5 comprises a CPU 6. CPU 6 preferably features multimedia instruction sets, and may comprise more than one core. For instance, CPU 6 is a desktop processor, such as an Intel Core™. CPU 6 is connected to a main memory 7 through a memory bus 8 (that can be, for instance, functioning according to the PCI, PCI Express, or AGP standards). Main memory 7 preferably presents at least 64GB and has a very low latency of less than 14ns. Memory bus allows for high data transfer rate, for example of more than 1200 Mhz. To this effect, the memory bus 8 may be made of gold plated conducting lines.

CPU 6 is also connected to SB chipset 9 through bus 12e. SB chipset 9 connects to peripheral devices 11a to 11d, such as hard drives, network controllers, I/O controllers... Data may flow from one device on the motherboard 5 to another through the different buses, such as the memory bus 8, extension buses 12a to 12e, which connects the devices together. Extension buses 12a to 12e can be of different nature. For instance, SB chipset 9 can connected to hard drive peripheral 11a through a SATA bus. SB chipset 9 can be connected to other peripherals 11b to 11d through PCI or PCIE buses 12b, 12c, 12e. SB chipset 9 is providing the necessary logic interface for permitting data transfer in-between peripheral devices 11a to 11d, and between peripheral devices 11a, 11b, 11c, 11d to CPU 6, and further devices connected to CPU 6 such as the main memory 7. The number of peripheral devices is not limited to the number presented on figure 2, and the actual physical computing system 2 may present more or less of such peripheral devices as the need may be.

According to the invention, each physical computing system 2 of host computer 1 comprises at least one graphic cards on motherboard 5. For instance, as shown on figure 2, CPU 6 is connected through graphic card bus 13 to four graphic cards GC.

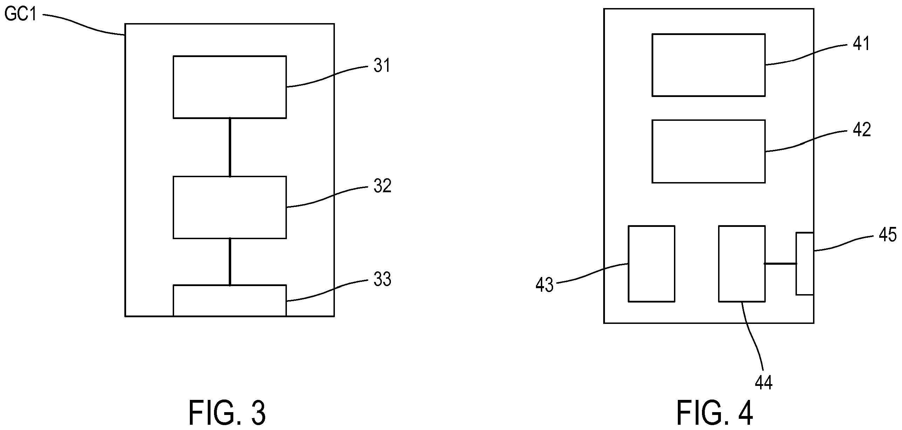

In some instances, one further graphic card may be connected to SB chipset 9 or directly to the CPU 6 to display information at the host location. The graphic card can be a simple video adapter, for directly connecting a monitor to the physical computing system 2. As represented on figure 3, the video adapter typically comprises a video memory 31, a conversion circuit 32 and at least one video output port 33. The video adapter usually does not comprise any dedicated graphic processing unit, such as 2D/3D accelerator or audio/video decoder, but the invention does not exclude that the video adapter does comprise such dedicated graphic processing unit.

Referring back to the embodiment represented on figure 2, motherboard 5 of physical computing system 2 comprises at least one graphic card GC, preferably connected directly to the CPU (ie without going through SB chipset 9). 4 graphic cards GC are represented on figure 2. In opposition to the video adapter, this at least one graphic card GC constitute computing resources dedicated to the virtual machines that will be running on the physical computing system 2.

As represented on figure 4, each graphic card GC comprises a graphic card memory 41 of preferably at least 2 GB, for storing display data. It also comprises a graphic processing unit (GPU) 42 that receives instructions, control and data, for instance from CPU 6, through the graphic card bus 13.

Graphic Processing Unit 42 is processing the instruction and data received and provides corresponding display data into the graphic card memory 41. The GPU 42 may also instruct the transfer of the display data stored into the main memory 7 to the graphic card memory 41, through graphic card bus 13 and memory bus 8.

Graphic card GC also usually comprises an encoder/decoder 43 to transform for instance encoded video (and/or audio) data (such as H.264 files) into display data for storage into the graphic card memory 41. Such encoded video (and/or audio) data may be provided by a DVD player, a hard disk, or any other peripheral connected to SB chipset 9.

A graphic card conversion unit 44 processes the display data stored into the graphic card memory 41 and provide them at graphic card video output port 45. However, since display data are intended to be sent to remote client 4, 4' over a network, conversion unit 44 is not a necessary feature of graphic card GC and usually will not be connected at host location to a screen.

Graphic card bus 13 connects directly CPU 6 to the graphic cards GC for allowing fast data transfer. If the number of available connections or lanes available on CPU6 is not sufficient for connecting the desired number of graphic cards, bus 13 may be provided with one or a plurality of bus switch 13a that allows to share CPU 6 connections or lanes among a plurality of graphic cards.

Graphics cards GC on the motherboard 5 do not need to be identical, or of the same type, or of the same performance level (as measured by the number of instruction performed by the GPU 42 per second). For instance, in the embodiment represented on figure 2, one graphic card could be of low performance, a second graphic card of medium performance, and third and fourth graphic cards of high performance.

In an alternative possible configuration of motherboard 5 of the physical computing system 2, CPU 6 does not include the necessary hardware for connecting directly to main memory 7 and graphic cards GC. In that case, the motherboard 5 may comprise an additional NB chipset, connected to respectively the CPU6, the SB chipset 9, the main memory 7 and graphic cards GC. This NB chipset redirects the data traffic among the various elements connected to it.

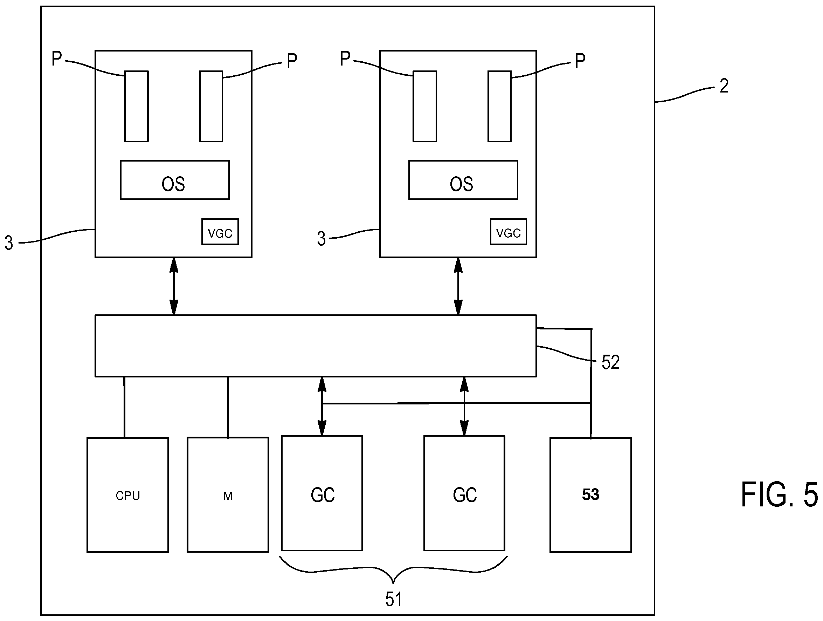

Figure 5 is a schematic representation of the processes running on a physical computing system 2 of host computer 1. In this exemplary representation, two virtual machines 3 are hosted in computer system 2. As mentioned above, computer system 2 may host more than two virtual machines, but for insuring a satisfactory level of performance of each machine, the computer system 2 hosts preferably less than fifty or, more preferably, ten virtual machines 3.

Each virtual machine 3 is provided with the necessary virtual resources such as a virtual CPU, virtual memory, a virtual graphic card vGC. As it will be explained in greater details later, each virtual machine 3 may also be connected at any time to at least one physical graphic card GC. Each virtual machine 3 is running application and processes P under control of an operating system OS and of a user, located on a client side 4, 4'(not represented on figure 5).

The operating system OS is configured to coordinate the function of all virtual resources that form the virtual machine as if they were actual physical resources. To this effect, computing system 2 is executing a virtual engine 52, mapping the requests of a virtual machine and/or operating system OS to use virtual resources toward the underlying physical devices (CPU, memory, graphic cards, ...) emulating those virtual resources.

When it comes to graphics capability, the operating system OS is either configured to direct graphical instructions, data and controls to the virtual graphic card vGC or configured to direct graphical instruction, data and controls to the at least one graphic cards GC of computing system 2.

The graphic cards GC of the physical computing systems 2 form a pool 51 of available graphic cards whose processing capacities, as it will be explained below in details, are made available to the virtual machines 3. The pool 51 is constituted of the graphics cards GC of motherboard 5 each featuring a GPU 42, encoder/decoder 43 and other resources, such as the one described with reference to figure 4. The pool 51 comprises at least one graphic card and preferably the pool 51 comprises a plurality of graphic cards of different performance levels.

To manage the pool 51 of graphic cards, physical computing system 2 is also running a graphic card pool manager 53. In an alternative implementation, graphic card pool manager may be part of the master server running in different computing system 2 of host computer 1. One function of graphic card pool manager 53 is to dynamically allocate graphics processing capacity from the pool 51 to the virtual machines 3 according to their needs.

In other words, graphic card pool manager 53 is managing the pool of graphic cards GC, allocating each of them to the running virtual machine(s) 3 in the computing system 2, and transparently to the virtual machine(s) 3. From a virtual machine and operating system perspective, at least one physical graphic card GC is fully dedicated to its graphical computation needs.

According to the invention, managing the pool 51 of graphic cards GC may comprise the following steps, taken alone or in combination:
- disconnecting the physical graphic card GC assigned to a virtual machine 3 to release it to the pool 51 of available graphic card GC;
- upon detection of the need to process advanced graphical instructions, selecting an available graphic card GC in the pool 51 of available graphics processing cards;
- connecting an available graphic card GC to the virtual machine 3 for processing the advanced graphical instructions.

Under the control of operating system OS and/or of virtual engine 52, basic graphical instructions originating from a virtual machine 3 are processed by their respective virtual graphic card VGC. Basic graphical instruction refers to any graphical instruction that can be processed by the virtual graphic card VGC without monopolizing excessive processing power of the physical computer system 2. This typically corresponds to tasks that requires the most basic level of graphic capabilities, such as desktop display, word processing, emailing, simple business presentation. Advanced graphical instructions originating from the virtual machines 3 are directed by the operating system OS and/or virtual engine 52 to the assigned (or deemed to be assigned) physical graphic cards.

When the virtual engine 52 detects the need, for a virtual machine 3 that is disconnected from a physical graphic card, to process advanced graphical instructions, it notifies the graphic card pool manager 53. Graphic card pool manager selects an available GPU in the pool 51 and directly connect (possibly with the assistance of virtual engine 52) the available GPU to the requesting virtual machine 3. This allows to process with great efficiency, and without imposing any workload to the virtual machine 3 the advanced graphical instructions. Such advanced graphical instructions can correspond to directX or OpenGL commands, acceleration requests or use of full screen mode. For instance, an available graphic card GC, once connected to the requesting virtual machine 3 may receive instructions and data, render display data that are first stored into the corresponding graphic card memory 41, and then transferred into main memory 7 where it is made available to the requesting virtual machine 3. Once the need of the virtual machine 3 to process advanced graphical instructions has been fulfilled, the virtual engine 52 notifies the graphic card pool manager, which releases the graphic card GC back to the pool 51.

Preferably, the selection step of determining an available GPU in the pool 51, comprises the performance level evaluation of the request and the selection of an appropriate graphic cards, in the pool 51, that exhibits sufficient performance level. In this way, the graphical computing resources of the physical computing system 2 are used efficiently.

Some virtualization and computing environments, i.e. mother board hardware configuration, software drivers and operating system features may natively allow to selectively connect and disconnect a physical graphic card GC to a particular virtual machine 3, and while the virtual machine 3 is running. This may be achieved, for instance, under the control of virtual engine 52 of computing system 2. And the invention may take benefits from this feature to dynamically manage the allocation and release of GPU to virtual machines.

Such feature to disconnect a physical graphic card GC from a virtual machine typically comprises the steps of:
- directing the operating system OS or virtual machine 3 to use an alternative graphic cards. In the context of the present invention, the alternative graphic card is a virtual graphic card;
- shutting down or disabling the driver of the physical graphic card that is to be disconnected;
- instructing virtual engine to de-assign the physical graphic card from the virtual machine and release it to the pool 51.

The connection of a physical graphic card GC to a virtual machine would comprises the opposite sequence:
- selecting the appropriate physical graphic card GC from the pool 51, and instructing virtual engine 51 to assign the selected physical graphic card to the virtual machine 3;
- launching or enabling the driver of the physical graphic card in the virtual machine 3;
- directing the operating system OS of virtual machine 3 to use the just assigned graphic card.

But the invention does not require the availability of this advanced feature.

An important feature of the invention is the ability of the virtual engine 52 to dynamically assign a graphic card GC to a virtual machine 3 and release it to the pool 51, while the virtual machine is running, and independently of the computing and virtualization environment of host computer 1. In most known virtualization environments, physical and virtual graphic resources are assigned permanently to a virtual machine upon its initiation, either entirely (as in the GPU pass-through approach) or partly (as in the software GPU sharing approach). In such cases, when a virtual machine 3 does not need to process advanced graphics instructions, the GPU resources assigned or partly assigned to it are wasted.

According to the present invention, upon initiation of a virtual machine 3 in the physical computing system 2 (i.e. at its creation), at least a virtual graphic card vGC and a physical graphic card GC are assigned to it for processing graphical instructions. If the physical computing system 2 is provided with more than one physical graphic cards, each graphic cards or a plurality of graphic cards can be assigned to the virtual machine 3 upon its initiation. Just like in the GPU pass-through approach, the graphic cards GC will appear to the virtual machines as entirely assigned.

The initiation of a virtual machine 3 generally includes the displaying of the desktop environment and other activities that are not graphic intensive. Therefore, upon initiation, the virtual graphic card vGC is selected as the default graphic card and provide sufficient processing power to render the display data that will be provided to client 4, 4', without degrading overall performance of the physical computer system 2.

During this time, and while the assigned physical graphic cards are not solicited, the operating system OS and/or initiated virtual machine 3 may communicate with the physical graphic card(s) GC that has or have been assigned to it.

This communication comprises the emission of requests from the operating system OS or virtual machine 3 to the assigned graphic card(s) GC, and comprises the corresponding replies of the assigned graphic card(s) GC to the virtual machine 3. Those requests and replies usually correspond to control signals and instructions that are repeatedly exchanged between the units, for instance on the graphic card bus 13, to make sure of their availability and functionality. The repetition of the requests and replies forms a communication pattern.

According to one embodiment of the invention, the virtual engine 52 monitor the communications taking place between the just initiated virtual machine 3 and the assigned physical graphic card. The virtual engine 52 identifies the communication pattern formed of repeated requests and replies. Upon identification of the communication pattern, the virtual engine 52 releases the assigned physical graphical to the pool 51, disconnecting it from the virtual machine 3. From this time on, the virtual engine 52 is emulating the presence of the originally assigned physical graphic card to the virtual machine 3, by sending the repeated replies upon reception of the repeated requests.

From the virtual machine 3 perspective, the physical graphic card GC is present and fully available. However, the graphic card GC has been fully released to the pool 51 and can be used by any other virtual machine 3 that is in need of processing advanced graphical instructions.

Different methods can be concurrently used to detect the need of a virtual machine 3 to process advanced graphical instructions, and connect and/or disconnect an available graphic card GC from/to the pool 51.

According to a first method, such a need is detected when the virtual engine 52 is receiving a request from the virtual machine 3 that differs from the repeated request. In such a case, the virtual engine 52 notifies graphic card pool manger 53 that is selecting an available graphic card in the pool 51 as it has been detailed previously, and assign it to the requesting virtual machine 3.

According to a second method, the need is detected by receiving an advanced graphical instruction at the virtual graphic card vGC. Since the efficient processing of such a graphical instruction would require too much processing power of the physical computing system 2, it is preferable to reassign a physical graphic card GC as detailed above and redirect the instruction to this unit.

According to another method, the need is detected by identifying in advance, an advanced graphical instruction in a process P being executed in the virtual machine 3. This process P can be halted during the time a physical graphic card GC is reassigned to the virtual machine 3, and executed once this is done.

According to a further method, the need is detected by reference to a database or a reference file that establishes advanced graphic usage and process power required for a list of named processes. Upon execution of a particular process in the virtual machine 3, the database or file can be consulted to determine the physical graphic card GC or the virtual graphic card vGC that is most adapted to the particular process. The database or reference file may be constructed from information collected from past execution of the processes.

In the event there are no available graphic cards GC in the pool 51 of computing system 2, and that the request of a virtual machine 3 cannot immediately be fulfilled, graphic card pool manager 53 may notify the master server. Master server may then take action to move virtual machine 3 (or, more generally, any virtual machine 3 hosted in computing system 2 that is connected to a physical graphic card) to another, more available, computing system 2 of host computer 1.

## Claims

1. A method for managing graphic cards (GC) in a computing system (2) comprising:
- upon initiation of a virtual machine (3) in the computing system (2), assigning at least a virtual graphic card (VGC) and a physical graphic card (GC) to the virtual machine (3) for processing graphical instructions, basic graphical instructions originating from the virtual machine (3) being processed by the virtual graphic card (VGC);
- disconnecting the physical graphic card (GC) from the virtual machine (3) to release it to a pool of available graphic cards (51);
- detecting the need of the virtual machine (3) to process advanced graphical instructions and, upon detection, selecting an available physical graphic card (GC) in the pool (51) of available graphic cards;
- connecting the available physical graphic card (GC) to the virtual machine (3), the connected physical graphic card being fully available to the virtual machine, for processing the advanced graphical instructions.

2. The method of claim 1, further comprising disconnecting the physical graphic card (GC) from the virtual machine (3) to release it to the pool (51) once the advanced graphical instructions have been processed.

3. The method of any preceding claim wherein the disconnecting step comprises:
• directing the virtual machine (3) to use the virtual graphic card (VGC);
• shutting down, in the virtual machine (3), the driver of the physical graphic card (GC);
• de-assigning the physical graphic card (GC) from the virtual machine to release it to the pool of available graphic card (51).

4. The method of any claim 1 to 2 wherein the disconnecting step comprises:
- identifying a communication pattern exchanged between the virtual machine (3) and the physical graphic card (GC), the communication pattern comprising a repeated request to the physical graphic card (GC) and a repeated reply from the physical graphic card (GC);
- emulating the presence of the physical graphic card (GC) by sending the repeated reply to the virtual machine (3) upon reception of the repeated request.

5. The method according to any preceding claim wherein the advanced graphical instructions comprises a DirectX command, an OpenGL command, a hardware acceleration request, or a full screen mode.

6. The method according to any preceding claim wherein the need of the virtual machine (3) to process advanced graphical instructions is detected by receiving an advanced graphical instruction at the virtual graphic card (VGC).

7. The method according to any claim 1 to 5 wherein the need of the virtual machine (3) to process advanced graphical instructions is detected by identifying an advanced graphical instruction in a process (P) executing in the virtual machine (3) .

8. The method according to claim 4 wherein the need of the virtual machine (3) to process advanced graphical instructions is detected by receiving, at the emulated physical graphic card, a request differing from the repeated request.

9. The method according to any claim 1 to 5 wherein the need of the virtual machine (3) to process advanced graphical instructions is detected by reference to a database or a reference file upon execution of a process.

## Patentansprüche

1. Verfahren zum Verwalten von Grafikkarten (graphics cards - GC) in einem Rechensystem (2), das Folgendes umfasst:
- auf eine Initiierung einer virtuellen Maschine (3) in dem Rechensystem (2) hin, Zuweisen wenigstens einer virtuellen Grafikkarte (virtual graphics card - VGC) und einer physischen Grafikkarte (GC) zu der virtuellen Maschine (3) zum Verarbeiten grafischer Anweisungen, wobei grundlegende grafische Anweisungen, die aus der virtuellen Maschine (3) stammen, durch die virtuelle Grafikkarte (VGC) verarbeitet werden;
- Trennen der physischen Grafikkarte (GC) von der virtuellen Maschine (3), um sie an einen Pool der verfügbaren Grafikkarten (51) freizugeben;
- Erfassen des Bedarfs der virtuellen Maschine (3), fortgeschrittene grafische Anweisungen zu verarbeiten, und, auf eine Erfassung hin, Auswählen einer verfügbaren physischen Grafikkarte (GC) in dem Pool (51) der verfügbaren Grafikkarten;
- Verbinden der verfügbaren physischen Grafikkarte (GC) mit der virtuellen Maschine (3), wobei die verbundene physische Grafikkarte für die virtuelle Maschine zum Verarbeiten der fortgeschrittenen grafischen Anweisungen vollständig verfügbar ist.

2. Verfahren nach Anspruch 1, das ferner das Trennen der physischen Grafikkarte (GC) von der virtuellen Maschine (3) umfasst, um sie an den Pool (51) freizugeben, sobald die fortgeschrittenen grafischen Anweisungen verarbeitet worden sind.

3. Verfahren nach einem der vorhergehenden Ansprüche, wobei der Trennschritt Folgendes umfasst:
• Anordnen der virtuellen Maschine (3), die virtuelle Grafikkarte (VGC) zu verwenden;
• Abschalten, in der virtuellen Maschine (3), des Treibers der physischen Grafikkarte (GC);
• Aufheben einer Zuweisung der physischen Grafikkarte (GC) zu der virtuellen Maschine, um sie an den Pool der verfügbaren Grafikkarte (51) freizugeben.

4. Verfahren nach einem der Ansprüche 1 bis 2, wobei der Trennschritt Folgendes umfasst:
- Identifizieren eines Kommunikationsmusters, das zwischen der virtuellen Maschine (3) und der physischen Grafikkarte (GC) ausgetauscht wird, wobei das Kommunikationsmuster eine wiederholte Anforderung an die physische Grafikkarte (GC) und eine wiederholte Antwort von der physischen Grafikkarte (GC) umfasst;
- Emulieren des Vorhandenseins der physischen Grafikkarte (GC) durch Senden der wiederholten Antwort an die virtuelle Maschine (3) auf einen Empfang der wiederholten Anforderung hin.

5. Verfahren nach einem der vorhergehenden Ansprüche, wobei die fortgeschrittenen grafischen Anweisungen einen DirectX-Befehl, einen OpenGL-Befehl, eine Hardwarebeschleunigungsanforderung oder einen Vollbildmodus umfassen.

6. Verfahren nach einem der vorhergehenden Ansprüche, wobei der Bedarf der virtuellen Maschine (3), fortgeschrittene grafische Anweisungen zu verarbeiten, durch Empfangen einer fortgeschrittenen grafischen Anweisung an der virtuellen Grafikkarte (VGC) erfasst wird.

7. Verfahren nach einem der Ansprüche 1 bis 5, wobei der Bedarf der virtuellen Maschine (3), fortgeschrittene grafische Anweisungen zu verarbeiten, durch Identifizieren einer fortgeschrittenen grafischen Anweisung in einem Prozess (P) erfasst wird, der in der virtuellen Maschine (3) ausgeführt wird.

8. Verfahren nach Anspruch 4, wobei der Bedarf der virtuellen Maschine (3), fortgeschrittene grafische Anweisungen zu verarbeiten, durch Empfangen, an der emulierten physischen Grafikkarte, einer Anforderung erfasst wird, die sich von der wiederholten Anforderung unterscheidet.

9. Verfahren nach einem der Ansprüche 1 bis 5, wobei der Bedarf der virtuellen Maschine (3), fortgeschrittene grafische Anweisungen zu verarbeiten, durch Verweis auf eine Datenbank oder eine Verweisdatei auf eine Ausführung eines Prozesses hin erfasst wird.

## Revendications

1. Procédé de gestion de cartes graphiques (GC) dans un système informatique (2) comprenant :
- lors du lancement d'une machine virtuelle (3) dans le système informatique (2), l'attribution d'au moins une carte graphique virtuelle (VGC) et une carte graphique physique (GC) à la machine virtuelle (3) pour le traitement des instructions graphiques, des instructions graphiques de base provenant de la machine virtuelle (3) étant en cours de traitement par la carte graphique virtuelle (VGC) ;
- la déconnection de la carte graphique physique (GC) de la machine virtuelle (3) pour la libérer vers une réserve de cartes graphiques (51) disponibles ;
- la détection du besoin de la machine virtuelle (3) pour traiter des instructions graphiques avancées et, lors de la détection, la sélection d'une carte graphique physique (GC) disponible dans la réserve (51) de cartes graphiques disponibles ;
- la connexion de la carte graphique physique (GC) disponible à la machine virtuelle (3), la carte graphique physique connectée étant entièrement à la disposition de la machine virtuelle, pour le traitement des instructions graphiques avancées.

2. Procédé selon la revendication 1, comprenant en outre la déconnexion de la carte graphique physique (GC) de la machine virtuelle (3) pour la libérer dans la réserve (51) une fois que les instructions graphiques avancées ont été traitées.

3. Procédé selon l'une quelconque des revendications précédentes, dans lequel l'étape de déconnexion comprend :
• le fait d'inciter la machine virtuelle (3) à utiliser la carte graphique virtuelle (VGC) ;
• l'arrêt, dans la machine virtuelle (3), du pilote de la carte graphique physique (GC) ;
• la désaffectation de la carte graphique physique (GC) de la machine virtuelle pour la libérer vers la réserve de cartes graphiques (51) disponibles.

4. Procédé selon l'une quelconque des revendications 1 à 2, dans lequel l'étape de déconnexion comprend :
- l'identification d'un modèle de communication échangé entre la machine virtuelle (3) et la carte graphique physique (GC), le modèle de communication comprenant une demande répétée à la carte graphique physique (GC) et une réponse répétée de la carte graphique physique (GC) ;
- l'émulation de la présence de la carte graphique physique (GC) en envoyant la réponse répétée à la machine virtuelle (3) lors de la réception de la demande répétée.

5. Procédé selon l'une quelconque des revendications précédentes, dans lequel les instructions graphiques avancées comprennent une commande DirectX, une commande OpenGL, une demande d'accélération matérielle ou un mode plein écran.

6. Procédé selon l'une quelconque des revendications précédentes, dans lequel le besoin de la machine virtuelle (3) de traiter des instructions graphiques avancées est détecté en recevant une instruction graphique avancée au niveau de la carte graphique virtuelle (VGC).

7. Procédé selon l'une quelconque des revendications 1 à 5, dans lequel le besoin de la machine virtuelle (3) de traiter des instructions graphiques avancées est détecté en identifiant une instruction graphique avancée dans un processus (P) s'exécutant dans la machine virtuelle (3).

8. Procédé selon la revendication 4, dans lequel le besoin de la machine virtuelle (3) de traiter des instructions graphiques avancées est détecté en recevant, au niveau de la carte graphique physique émulée, une demande différant de la demande répétée.

9. Procédé selon l'une quelconque des revendications 1 à 5, dans lequel le besoin de la machine virtuelle (3) de traiter des instructions graphiques avancées est détecté par référence à une base de données ou à un fichier de référence lors de l'exécution d'un processus.
